# EUROPEAN PATENT SPECIFICATION

(11) **EP 4 033 748 B1**
(45) Date of publication and mention of the grant of the patent: **04.03.2026**
(21) Application number: 20887580.7
(22) Date of filing: 12.11.2020
(51) Int. Cl.: G03B 5/00

(54) **SMA DRIVER, CAMERA DEVICE, AND ELECTRONIC DEVICE**
SMA-TREIBER, KAMERAVORRICHTUNG UND ELEKTRONISCHE VORRICHTUNG
DISPOSITIF D'ENTRAÎNEMENT D'ALLIAGE À MÉMOIRE DE FORME (SMA), DISPOSITIF DE CAMÉRA, ET DISPOSITIF ÉLECTRONIQUE

(30) Priority: 12.11.2019 CN 201921945695 U
(43) Date of publication of application: 27.07.2022
(73) Proprietor: Huawei Technologies Co., Ltd., Longgang District, Shenzhen, Guangdong 518129 (CN)
(72) Inventor: LIU, Bin, Shenzhen, Guangdong 518129 (CN); LI, Dengfeng, Shenzhen, Guangdong 518129 (CN)
(74) Representative: Gill Jennings & Every LLP
(86) International application number: PCT/CN2020/128335
(87) International publication number: WO 2021/093802

(56) References cited:
- CN-A- 109 302 556
- CN-A- 110 286 461
- CN-U- 209 375 796
- CN-U- 209 375 796
- CN-U- 210 958 466
- US-A1- 2010 074 607
- US-A1- 2011 217 031
- US-A1- 2017 357 076
- US-A1- 2018 149 142

## Description

This application claims priority to Chinese Patent Application No. 201921945695.5, filed with the Chinese Patent Office on November 12, 2019 and entitled "SMA DRIVER, CAMERA APPARATUS, AND ELECTRONIC DEVICE".

### TECHNICAL FIELD

This application relates to the field of camera technologies, and in particular, to an SMA driver, a camera apparatus, and an electronic device.

### BACKGROUND

In recent years, with miniaturization of various electronic products and diversification of functions such as a mobile phone, a tablet computer, and the like with a camera function, to achieve higher performance, requirements on hardware and software included in the electronic products are increasingly strict, especially requirements on optical image stabilization are very important. An exquisite installation technology, an assembly process, an image stabilization structure, and the like can make the performance more perfect on the product.

In an existing electronic device, an optical image stabilizer or an optical image stabilization apparatus is often used in a camera lens with a high-quality image, to prevent image damage caused by hand shaking in a shooting process. A driver used by a conventional optical image stabilization (Optical Image Stabilization, OIS for short) apparatus includes a voice coil motor (Voice Coil Motor, VCM for short) type OIS apparatus, a shape memory alloy (Shape Memory Alloys, SMA for short) type OIS apparatus, a VCM-SMA type OIS apparatus, a piezoelectric type OIS apparatus, or a stepper motor type OIS apparatus.

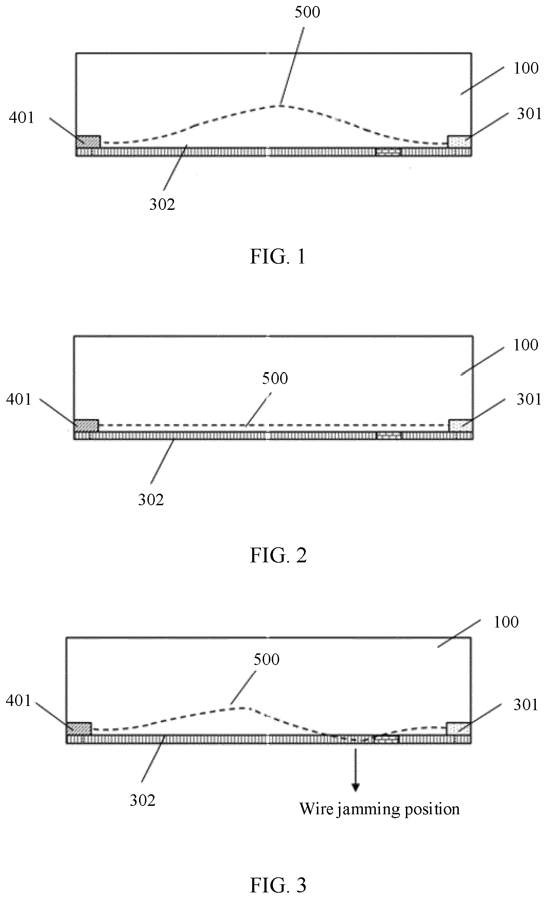

In a conventional SMA motor, to reduce a risk at which a wire is dropped and broken, a length of an SMA wire 500 is greater than a distance between a fixed wire connection part 401 and a moving wire connection part 301, and the SMA wire 500 is in a relaxed state, as shown in FIG. 1. In this way, a specific amount of redundancy exists during the drop of the SMA wire. Deformation of the wire decreases (the wire needs to be straightened and then subject to tension), and stress decreases, reducing a risk at which the wire is broken after being tightened. However, such a structure affects the assembly of the OIS apparatus. In an actual assembly process, especially when a housing is assembled, due to redundancy and looseness of the SMA wire, problems that because the SMA wire is crushed or the SMA wire is pressed into a chassis during assembly of the housing, the SMA wire is cut due to interference with another component, and consequently the wire is dropped and broken may occur. US 2011/217031 A1 discloses an apparatus for SMA bender actuator. US 2018/149142 A1 discloses an assembly method for SMA alloy actuator arrangement.

Currently, FIG. 2 is a schematic structural diagram of SMA wire assembly in an SMA motor. Thermoelastic martensite transformation is a root cause for SMA generating the features such as a shape memory effect, superelasticity, and the like. In the conventional technology, the heating treatment is performed on the SMA wire in the assembly process, that is, the temperature-raising treatment is performed on the SMA wire in the assembly process by taking advantage of the feature that the SMA wire increases and decreases with the rise and fall of the temperature, so that the SMA wire is in a tensioned state, to complete the assembly process of the housing and other components. However, according to thermodynamics, there are a chemical free energy change, a surface energy change, and a phase transformation resistance in austenitic and martensite phases. The phase transformation occurs only when a specific temperature is reached. In addition, because the constant temperature state can be controlled hardly and there is a sensitivity of the SMA wire to temperature, the problem of wire jamming during the assembly still exists, as shown in FIG. 3.

Therefore, it is particularly desirable to provide an SMA driver, a camera apparatus, and an electronic device that can avoid a problem of loose wires jamming in an assembly process.

In view of this, this application is proposed.

### SUMMARY

A main objective of this application is to provide an SMA driver, a camera apparatus, and an electronic device, so as to effectively resolve problems that because an SMA wire is crushed or a wire is pressed into a chassis during assembly, the SMA wire is cut due to interference with another component, and consequently the wire is dropped and broken. This can overcome the foregoing problems or at least partially resolve the foregoing technical problems.

The above objectives and others can be achieved by the features of the independent claims. Further implementations are embodied in the dependent claims, the summary, and the accompanying drawings.

According to a first aspect, an SMA driver is provided, and includes a housing, a support member, a moving member, and an SMA wire, where the housing covers the support member and the moving member, and the moving member can move relative to the support member.

The support member includes a fixed wire connection part, the moving member includes a connected moving wire connection part and a spring plate, the SMA wire extends between the fixed wire connection part and the moving wire connection part, two ends of the SMA wire are respectively connected to the fixed wire connection part and the moving wire connection part, and the spring plate is configured to connect to a lens unit.

The SMA driver further includes an adhesive part, and the adhesive part bonds at least a part of the SMA wire to at least a part of the spring plate.

According to the SMA driver in this embodiment of this application, at least a part of the SMA wire may be bonded to at least a part of the spring plate by setting the adhesive part, so that a risk at which because the SMA wire is crushed or the wire is pressed into the motor chassis during assembly, the wire is cut due to interference with another component can be avoided, to ensure operation performance of the SMA wire.

In a possible implementation, the spring plate includes an upper end face, a lower end face, and a plurality of side faces, the SMA wire is disposed around the plurality of side faces of the spring plate, and the adhesive part bonds at least a part of the SMA wire to at least a part of the side faces of the spring plate. In this way, the bonding is convenient, and the operation performance of the SMA wire, the spring plate, and other peripheral components is not affected, thereby ensuring the normal operation of the SMA driver.

In a possible implementation, the adhesive part is disposed at a location close to the middle of the SMA wire; and/or the adhesive part is disposed at a location close to the middle of at least one of the side faces of the spring plate. In this way, the symmetry is good, and is helpful to prevent the SMA wire having a slightly longer length or more redundant amount from being crushed, and can further avoid a risk at which because the SMA wire is crushed or the SMA wire is pressed into the motor chassis during, the SMA wire is cut due to interference with another component.

In a possible implementation, the spring plate and the moving wire connection part are integrally formed, and the moving wire connection part may be disposed at an extension part of two relative side corners of the spring plate. In this way, the structure is simple, the internal structure of the apparatus can be simpler, the processing and manufacturing are convenient, and the assembly efficiency can be improved.

In a possible implementation, the spring plate is provided with a welding connection part, and the welding connection part is configured to connect to the support member.

In a possible implementation, the adhesive part bonds at least a part of the SMA wire to at least a part of the welding connection part.

The spring plate is connected to the support member by welding the connection part, and the operation performance of the spring plate is not affected, and the connection is reliable. Arranging the adhesive part on the SMA wire and the welding connection part is easy to operate, convenient to bond, and highly adaptable, without affecting the operation performance of the spring plate.

In a possible implementation, the support member further includes a chassis, and the fixed wire connection part is fastened to the chassis.

In a possible implementation, the chassis is provided with a conductive component, and the conductive component is electrically connected to the SMA wire by using the fixed wire connection part, so that the SMA wire is alternately tensioned or loosened and drives at least a part of the spring plate to move.

In a possible implementation, a material of the adhesive part includes a jelly adhesive or a damping adhesive.

It should be understood that a material of the adhesive part may be the jelly adhesive, the damping adhesive, or another volatile non-cured adhesive. The SMA wire and the spring plate are bonded and fixed by using the jelly adhesive, and then the housing covers the support member and the moving member for assembly, so that a risk at which because the SMA wire is crushed or the SMA wire is pressed into the motor chassis during assembly, the SMA wire is cut due to interference with another component can be avoided. In addition, after the assembly is completed, the jelly adhesive does not solidify after being heated. The jelly adhesive has good elasticity and does not affect the movement of the SMA wire and the spring plate, thereby ensuring normal operation of the SMA wire and the spring plate. The damping adhesive is used to bond the SMA wire and the spring plate, and then the housing covers the support member and the moving member for assembly, which can also reduce the amount of shake of the SMA wire and reduce a risk at which the wire is broken or the wire is jammed with a peripheral component in a dropping process. In addition, the movement of the SMA wire and the spring plate is not affected, and the normal operation of the SMA wire can be ensured.

According to a second aspect, an SMA driver is further provided, and includes a housing, a support member, a moving member, and at least one group of SMA wires, where the housing covers the support member and the moving member, and the moving member can move relative to the support member.

The support member includes a fixed wire connection part, the moving member includes a moving wire connection part, each group of SMA wires includes a first SMA wire and a second SMA wire, each SMA wire extends between the corresponding fixed wire connection part and the corresponding moving wire connection part, and two ends of each SMA wire are respectively connected to the corresponding fixed wire connection part and the corresponding moving wire connection part.

The SMA driver further includes an adhesive part, and the adhesive part bonds at least a part of the first SMA wire to at least a part of the second SMA wire. At least a part of the first SMA wire and at least a part of the second SMA wire are bonded by the adhesive part, so that a risk at which because the SMA wire is crushed or the SMA wire is pressed into the motor chassis during assembly, the SMA wire is cut due to interference with another component can be avoided.

It should be understood that the SMA driver in the first aspect is mainly applicable to an SMA driver in which at least one SMA wire is disposed on any side face of the driver, and the SMA driver in the second aspect is mainly applicable to an SMA driver in which at least two SMA wires are disposed on any side face of the driver.

In a possible implementation, the adhesive part is disposed at a location close to the middle of the first SMA wire; and/or the adhesive part is disposed at a location close to the middle of the second SMA wire. In this way, the symmetry is good, and is helpful to prevent the SMA wire having a slightly longer length or more redundant amount from being crushed. Further, a risk at which because the SMA wire is crushed or the SMA wire is pressed into the motor chassis during assembly, the SMA wire is cut due to interference with another component can be avoided.

In a possible implementation, the fixed wire connection part includes a first fixed wire connection part and a second fixed wire connection part, and the first fixed wire connection part and the second fixed wire connection part are respectively configured to connect to the first SMA wire and the second SMA wire.

The moving wire connection part includes a first moving wire connection part and a second moving wire connection part, and the first moving wire connection part and the second moving wire connection part are respectively configured to connect to the first SMA wire and the second SMA wire.

In a possible implementation, the moving member further includes a spring plate, and the spring plate is configured to connect to a lens unit.

In a possible implementation, the support member further includes a chassis, and the fixed wire connection part is fastened to the chassis.

In a possible implementation, the chassis is provided with a conductive component, and the conductive component is electrically connected to the SMA wire by using the fixed wire connection part, so that the SMA wire is alternately tensioned or loosened.

In a possible implementation, a material of the adhesive part includes a jelly adhesive or a damping adhesive.

According to a third aspect, a camera apparatus is provided, and includes the foregoing SMA driver and a lens unit, and the SMA driver can drive the lens unit to move along a predetermined direction. The spring plate is connected to the lens unit, so that at least a part of the spring plate is driven by the SMA wire to drive the lens unit to move along a predetermined direction.

The camera apparatus uses an SMA driver to drive movement of the lens unit to provide an OIS. The camera apparatus further includes an image sensor on which a lens unit is arranged to focus an image.

According to a fourth aspect, an electronic device is provided, and includes the foregoing camera apparatus.

The technical solutions provided in this application may achieve the following beneficial effects:

The SMA driver provided in this application is provided with an adhesive part, and at least a part of an SMA wire and at least a part of the spring plate are bonded by the adhesive part. In this way, a risk at which because the SMA wire is crushed or the SMA wire is pressed into the motor chassis during assembly, the SMA wire is cut due to interference with another component can be avoided. In other words, the shaking amount of the wire can be reduced, a risk at which the wire is broken or the wire is jammed with a peripheral component in a dropping process can be reduced, the problem of the assembly interference or the wire jamming during the assembly of the loose wire can be avoided, thereby facilitating the assembly process, and the operation performance of the SMA wire can be ensured.

The SMA driver provided in this application is provided with an adhesive part, and at least a part of a first SMA wire and at least a part of a second SMA wire are bonded by the adhesive part. In this way, a risk at which because the SMA wire is crushed or the SMA wire is pressed into the motor chassis during assembly, the SMA wire is cut due to interference with another component can be avoided. In other words, the shaking amount of the wire can be reduced, a risk at which the wire is broken or the wire is jammed with a peripheral component in a dropping process can be reduced, the problem of the assembly interference or the wire jamming during the assembly of the loose wire can be avoided, thereby facilitating the assembly process, and the operation performance of the SMA wire can be ensured.

A camera apparatus and an electronic device provided in this application include the foregoing SMA driver, and therefore, have at least the same advantages as the foregoing SMA driver.

It should be understood that the foregoing general description and the following detailed description are merely examples, and do not limit this application.

### BRIEF DESCRIPTION OF DRAWINGS

To describe the technical solutions in the specific implementations of this application or in the conventional technology more clearly, the following briefly describes the accompanying drawings for describing the specific implementations or the conventional technology. It is clear that the accompanying drawings in the following description show some implementations of this application, and a person of ordinary skill in the art may still derive other drawings from these accompanying drawings without creative efforts.
FIG. 1 is a schematic structural diagram of an SMA motor in the conventional technology;
FIG. 2 is a schematic structural diagram of SMA wire assembly in an SMA motor in the conventional technology;
FIG. 3 is a schematic diagram of a jamming state during SMA wire assembly in the conventional technology;
FIG. 4 is a schematic cross-sectional diagram of an SMA driver according to an example implementation of this application;
FIG. 5 is a schematic structural diagram of an SMA driver according to an example implementation of this application;
FIG. 6 is a schematic structural diagram of an SMA driver according to another example implementation of this application;
FIG. 7 is a schematic structural diagram of a camera apparatus according to an example implementation of this application;
FIG. 8 is a schematic exploded view of FIG. 7;
FIG. 9 is a schematic structural diagram of the camera apparatus in FIG. 7 after the housing is removed.
FIG. 10 is a schematic structural diagram of a housing according to an example implementation of this application;
FIG. 11 is a schematic structural diagram of a lens unit according to an example implementation of this application;
FIG. 12 is a schematic structural diagram of a moving member according to an example implementation of this application;
FIG. 13 is a schematic structural diagram of a support member according to an example implementation of this application; and
FIG. 14 is a schematic cross-sectional diagram of an SMA driver according to another example implementation of this application.

### Reference numerals:

100: a housing; 101: an upper end face; 102: a protective sidewall; 103: a through hole;
200: a lens unit; 201: a lens; 202: a lens holder;
300: a moving member; 301: a moving wire connection part; 3011: a first moving wire connection part; 3012: a second moving wire connection part; 302: a spring plate; 3021: a welding connection part; 3022: a solder joint; 3023: an extension part;
400: a support member; 401: a fixed wire connection part; 4011: a first fixed wire connection part; 4012: a second fixed wire connection part; 402: a chassis;
500: an SMA wire; 501: a first SMA wire; 502: a second SMA wire; and
600: an adhesive part.

The accompanying drawings herein are incorporated into the summary and form a part of this summary, show embodiments in accordance with this application, and are used together with the summary to explain principles of this application.

### DESCRIPTION OF EMBODIMENTS

To better understand the technical solutions of this application, the following describes the embodiments of this application in detail with reference to the accompanying drawings.

It should be noted that the described embodiments are merely a part rather than all of the embodiments of this application. All other embodiments obtained by a person of ordinary skill in the art based on the embodiments of this application without creative efforts shall fall within the protection scope of this application.

The terms used in the embodiments of this application are merely for the purpose of illustrating specific embodiments, and are not intended to limit this application. The terms "a", "the" and "this" of singular forms used in the embodiments and the appended claims of this application are also intended to include plural forms, unless otherwise specified in the context clearly.

It should be noted that orientation terms such as "upper", "down", "left", "right", "inner", and "outer" described in the embodiments of this application are described from angles shown in the accompanying drawings. This should not be construed as a limitation on the embodiments of this application. In addition, in the context, it should be further understood that when reference is made to one element being connected "up" or "down" to another element, it is not only capable of being directly connected "up" or "down" to the other element, it may also be indirectly connected "up" or "down" to another element via an intermediate element.

In a specific embodiment, the following further describes this application in detail by using specific embodiments and with reference to the accompanying drawings.

SMA drivers may be used to drive movement of various different types of moving elements (movable elements) for various purposes.

In general, an SMA driver may be used to provide an OIS for a camera apparatus. Further, the SMA driver may be used to provide the location control of a wide range of types of moving members supported on the support member. For example, the SMA driver may be configured to provide an OIS for the camera apparatus by driving movement of a lens unit in the camera apparatus. The SMA driver has the advantages of a small size and high efficiency, helping to reduce the overall size of the product.

The embodiments of this application may be applied to various types of camera apparatuses including an SMA driver. The camera apparatus may be included in an electronic device such as a mobile phone, a tablet computer, a media player, a portable digital assistant, and the like.

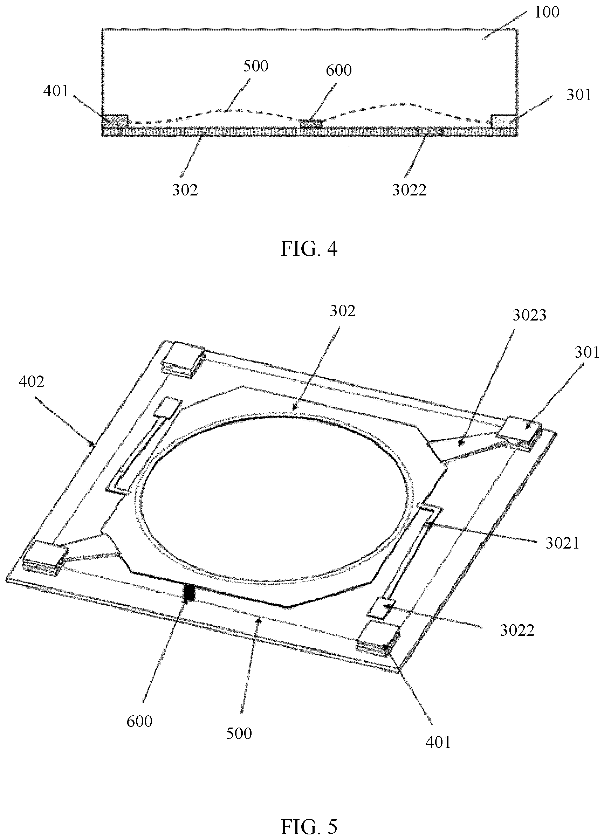

Referring to FIG. 4 to FIG. 13, an embodiment of this application provides an SMA driver. The SMA driver may include a housing 100, a support member 400, a moving member 300, an SMA wire 500, and an adhesive part 600, where the housing 100 covers the support member 400 and the moving member 300, the moving member 300 can move relative to the support member 400, the support member 400 includes a fixed wire connection part 401, the moving member 300 includes a moving wire connection part 301 and a spring plate 302 that are connected to each other, the SMA wire 500 extends between the fixed wire connection part 401 and the moving wire connection part 301, and both ends of the SMA wire 500 are respectively connected to the fixed wire connection part 401 and the moving wire connection part 301.

The spring plate 302 is configured to connect to the lens unit 200, may be configured to carry the lens unit 200, and may enable at least a part of the spring plate 302 to, when moving, drive the lens unit 200 to move along a predetermined direction.

The adhesive part 600 is disposed on the SMA wire 500 and the spring plate 302, and is configured to bond at least a part of the SMA wire 500 to at least a part of the spring plate 302.

It should be noted that bonding at least a part of the SMA wire 500 to at least a part of the spring plate 302 means that any part of the SMA wire 500 may be bonded to any part of the spring plate 302. Alternatively, two or more parts of the SMA wire 500 may be bonded to two or more parts of the spring plate 302. Preferably, any part of the SMA wire 500 is bonded to a part of the corresponding spring plate 302 by using the adhesive part 600, so as to achieve the purpose of this application.

SMA is an abbreviation for "Shape Memory Alloy" and refers to a shape memory alloy. The SMA material has the property of undergoing a solid phase transition when heated, which causes the SMA material to shrink. The SMA material enters a martensite phase at low temperature and an austenite phase at high temperature. The induced deformation of the austenite phase causes shrinkage of the SMA material.

A shape memory alloy wire is briefly referred to as "SMA wire". When the SMA wire is heated due to switch-on of electric current or heating, it can shrink to eliminate the deformation occurred at a lower temperature. When the SMA wire is cooled due to switch-off of electric current or no heating, it can restore the original length to the original shape before deformation, thereby driving the lens to slide and shift.

Thus, the SMA driver can change the length of the SMA wire 500 by using the heat-shrinking and cold-expanding characteristics of the SMA wire 500, so that at least a part of the spring plate 302 is moved in any direction in the plane. Further, an objective of driving the lens unit 200 is accomplished by using a pulling force of the SMA wire 500, so that the lens unit 200 quickly adjusts a location, and an objective of a clear image is further achieved. Further, an adhesive part 600 is disposed in the SMA driver, and the SMA wire 500 is bonded to the spring plate 302 by using the adhesive part 600. In this way, a risk at which because the SMA wire is crushed or the SMA wire is pressed into the motor chassis during assembly, the SMA wire is cut due to interference with another component can be avoided. In other words, the shaking amount of the wire can be reduced, risk at which the wire is broken or the wire is jammed with a peripheral component in a dropping process can be reduced, the problem of the assembly interference or the wire jamming during the assembly of the loose wire can be avoided, thereby facilitating the assembly process, and the normal operation of the SMA wire can be ensured.

Specifically, a material for making the SMA wire 500 is not particularly limited, and the SMA wire 500 may be made of any suitable SMA material, such as nitinol or an additional titanium-containing SMA material.

Specifically, a diameter of the SMA wire 500 is not particularly limited, and a thickness of the SMA wire 500 may be adjusted according to an actual performance requirement, and a degree of thickness does not need to be generalized. For example, the SMA wire 500 may have a diameter of 10-50 microns.

### [Adhesive part]

In a specific implementation, a material of the adhesive part includes a jelly adhesive or a damping adhesive.

The jelly adhesive, also referred to as a gel adhesive or an animal adhesive, namely, thermosol, looks like jelly in appearance and is elastomer, and is an environmental-friendly adhesive and a natural material with good adhesive performance. It has better weather resistance and excellent chemical stability, and can absorb the stress generated by thermal expansion and cold contraction without cracking, with moderate hardness and good recovery of elasticity. The SMA wire 500 and the spring plate 302 are bonded and fixed by using the jelly adhesive, and then the housing 100 covers the support member 400 and the moving member 300 for assembly, so that the housing 100 can avoid a risk at which because the SMA wire is crushed or the SMA wire 500 is pressed into the motor chassis during assembly, the SMA wire 500 is cut due to interference with another component. In addition, after the assembly is completed, the jelly adhesive does not solidify after being heated. The jelly adhesive has good elasticity and does not affect the movement of the SMA wire and the spring plate 302, thereby ensuring normal operation of the SMA wire.

The damping adhesive is a kind of rubber material that utilizes the high elasticity of rubber itself to damp structural vibration. This treatment is referred to as anti-vibration damping, which can be divided into free damping treatment and constrained damping treatment.

An adhesive is used to bond the SMA wire 500, the assembly process is optimized. After the assembly is completed, in the adhesive volatilization or the high-elastic adhesive process solution, a risk at which because the SMA wire is crushed or the SMA wire 500 is pressed into the motor chassis during assembly, the SMA wire 500 is cut due to interference with another component can be avoided. In addition, the normal operation of the SMA wire 500 is ensured. It should be understood that, typically but non-restrictively, the adhesive may be a volatile non-cured adhesive, or a jelly adhesive, or a damping adhesive, or the like. If the volatile non-curing adhesive or the jelly adhesive is used, the bonding point may be located on any part close to the SMA wire 500 inside the housing 100, and a bonding point is preferably selected according to a specific situation. If the damping adhesive is used, a bonding point should be located at a place where the operation performance of the surrounding components of the SMA wire 500 is not affected.

Further, when bonding is performed, the adhesive may be disposed on the SMA wire 500 and the spring plate 302 by using an adhesive or an adhesive output tool such as an adhesive gun. A quantity of adhesives to be applied cannot be more or fewer. When there are fewer adhesives to be applied, bonding performance may be affected, and when there are more adhesives to be applied, a waste may be caused, and operation performance of the SMA wire 500 may be further affected. Usually, the quantity of adhesives to be applied is approximately 2 mg.

As shown in FIG. 5, FIG. 6, and FIG. 12, in a specific implementation, the spring plate 302 includes an upper end face, a lower end face, and four side faces, and the SMA wire 500 is disposed around the four side faces of the spring plate 302. The adhesive part 600 bonds at least a part of the SMA wire 500 to at least a part of the side face of the spring plate 302. In this way, the bonding is convenient, the operation performance of the SMA wire 500, the spring plate 302, and other peripheral components is not affected, so that a risk at which because the SMA wire is crushed or the SMA wire 500 is pressed into the motor chassis during assembly, the SMA wire 500 is cut due to interference with another component can be avoided.

As shown in FIG. 4 to FIG. 6, in a specific implementation, the adhesive part 600 is disposed at a location close to the middle of the SMA wire 500, and/or the adhesive part 600 is disposed at a location close to the middle of a side face of the spring plate 302. In this way, the symmetry is good, and is helpful to prevent the SMA wire 500 having a slightly longer length or more redundant amount from being crushed, and can further avoid a risk at which because the SMA wire is crushed or the SMA wire 500 is pressed into the motor chassis during assembly, the SMA wire 500 is cut due to interference with another component.

It should be noted that the term "and/or" used in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It may be understood that the location near the middle of the SMA wire 500 means that the adhesive part 600 may be properly located in the middle of the SMA wire 500, or may be disposed near the middle of the SMA wire 500, that is, close to the middle of the SMA wire 500, not far from each other. Similarly, a similar explanation is provided for the arrangement of a location close to the middle of the side face of the spring plate 302.

### [Moving member]

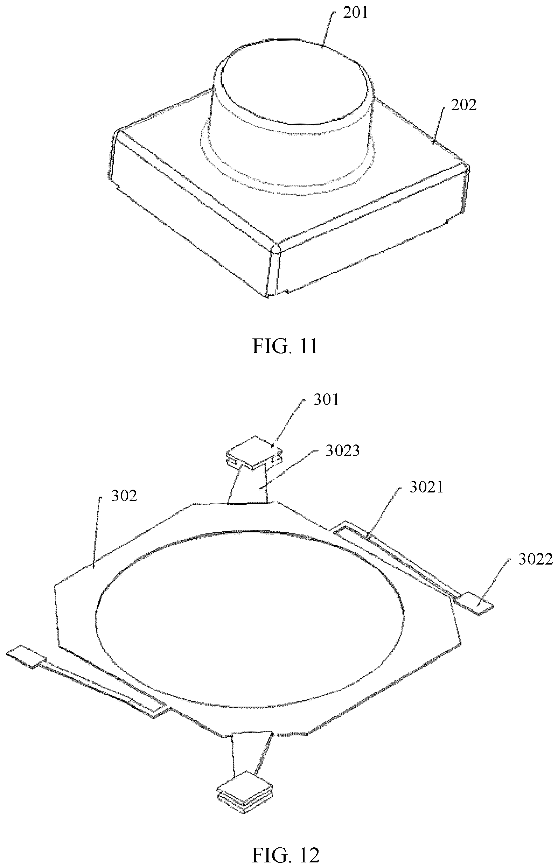

The moving member 300 may generally include any type of movable element, for example, may include a lens unit 200, a spring 302 for supporting the lens unit 200, and the like. The spring plate 302 has a shape shown in FIG. 12, but more generally, may be in any shape.

The moving member 300 is capable of reciprocating relative to the support member 400 to alternately tension and relax or restore the SMA wire 500 even if the SMA wire 500 is strained and unstrained or restored, while the SMA wire 500 is heated or otherwise maintained at a predetermined temperature.

The moving member 300 may be supported on the support member 400 by an SMA wire 500.

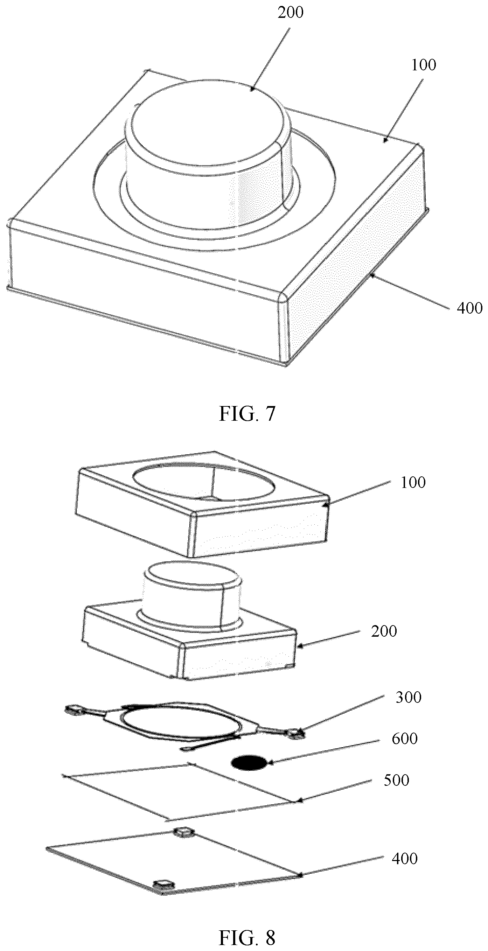

As shown in FIG. 8 and FIG. 12, in a specific implementation, the moving member 300 includes a moving wire connection part 301 and a spring plate 302, where the moving wire connection part 301 is configured to connect to one end of the SMA wire 500, and the spring plate 302 is configured to support a lower end face of the lens unit 200.

Specifically, a connection manner of the moving wire connection part 301 and the SMA wire 500 is crimped. The moving wire connection part 301 may be a crimp or a crimping part, and one end of the SMA wire 500 is fixed in the moving wire connection part 301 in a crimping manner. Certainly, a connection manner of the moving wire connection part 301 and the SMA wire 500 is not limited thereto, and may also be, for example, welding, bonding, or the like. The crimping mode is preferred, and the structure is simple, the operation is convenient and the connection is firm and reliable.

Specifically, as shown in FIG. 12, the moving wire connection part 301 is integrally formed with the spring plate 302, and the moving wire connection part 301 is disposed at extension parts 3023 of two relative side corners of the spring plate 302. Further, the spring plate 302 includes four side corners: a first side corner, a second side corner, a third side corner, and a fourth side corner, where the first side corner and the third side corner are relatively disposed, and the second side corner and the fourth side corner are relatively disposed. Each side corner may include an outwardly extended extension part 3023, and the moving wire connection part 301 may be disposed at the extension parts 3023 of the first side corner and the third side corner, or may be disposed at the extension part 3023 of the second side corner and the fourth side corner. In this way, the structure is simple and convenient for processing, manufacturing and assembly.

It may be understood that two relative moving wire connection parts 301 may be disposed on the spring plate 302, one moving wire connection part 301 may be configured to separately connect one end of the two SMA wires 500, and the other moving wire connection part 301 may be configured to separately connect one end of the other two SMA wires 500.

Certainly, the moving wire connection part 301 may be formed as a separate structure attached to the spring plate 302, that is, not integrated with the spring plate 302. Other types of moving wire connection parts 301 (such as bonding pads) or moving wire connection parts 301 organized in other arrangements may also be included within the moving member 300.

As shown in FIG. 12, in a specific implementation, a welding connection part 3021 is disposed on the spring plate 302, and the welding connection part 3021 is configured to connect to the support member 400. Further, the support member 400 includes a chassis 402, and the welding connection part 3021 is configured to be fixedly connected to the chassis 402.

Specifically, a welding connection part 3021 may be disposed on two relative side faces of the spring plate 302, an end of the welding connection part 3021 that is far from the spring plate 302 is a welding spot 3022, and the spring plate 302 is connected to the chassis 402 by using the welding connection part 3021. The operation performance of the spring plate 302 is not affected, and the connection is reliable.

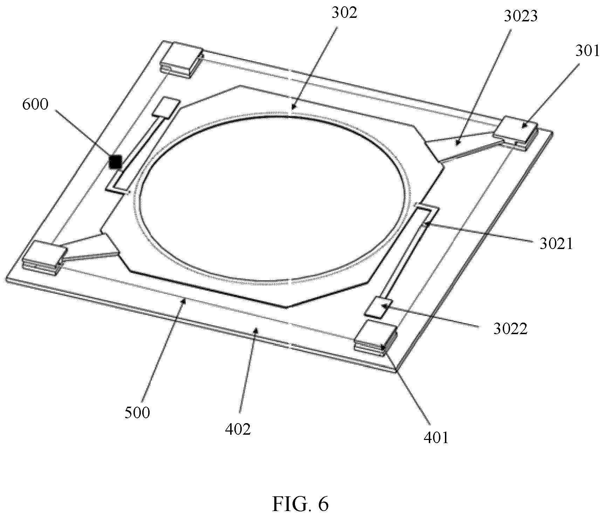

As shown in FIG. 6, in a possible implementation, the adhesive part 600 bonds at least a part of the SMA wire 500 to the welding connection part 3021 of the spring plate 302. In this way, the bonding is convenient, the adaptability is strong, and the housing 100 can be prevented from crushing the SMA wire or pressing the SMA wire 500 into the motor chassis in the assembly process.

### [Support member]

The SMA driver includes a support member 400, a moving member 300, and an SMA wire 500. The moving member 300 is disposed on the support member 400 in a manner that allows the moving member 300 to move relative to the support member 400. The SMA wire 500 is arranged to drive movement of the moving member 300 relative to the support member 400. The support member 400 is schematically shown but may generally be any type of member suitable for supporting the moving member 300. The support member 400 supports the moving member 300 in a manner that allows the moving member 300 to move relative to the support member 400.

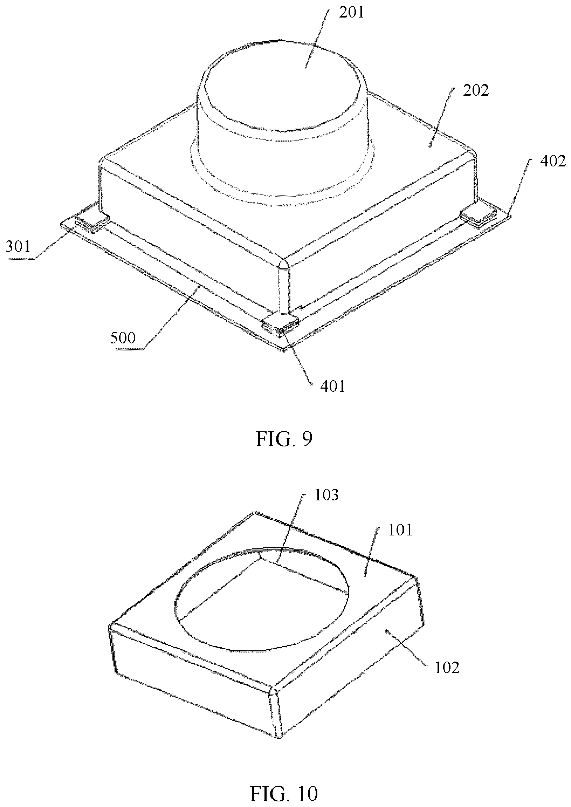

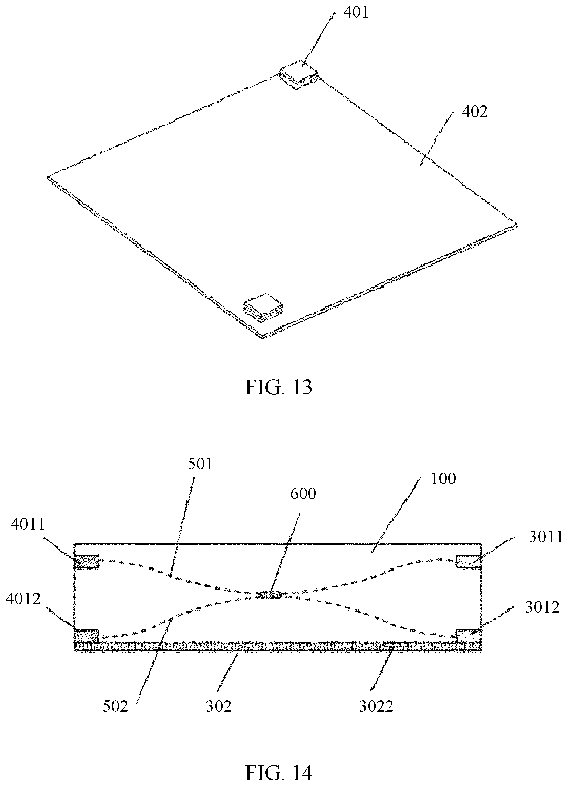

As shown in FIG. 9 and FIG. 13, in a specific implementation, the support member 400 includes a fixed wire connection part 401 and a chassis 402, the fixed wire connection part 401 is fixed to the chassis 402, and the fixed wire connection part 401 is configured to connect to one end of the SMA wire 500. The fixed wire connection part 401 has a square shape, but more generally, may be in any shape. Similarly, the chassis 402 has a square shape, but more generally, may be in any shape.

Specifically, a connection manner of the fixed wire connection part 401 and the SMA wire 500 is crimped. The fixed wire connection part 401 may be a crimp or a crimping part, and one end of the SMA wire 500 is fixed in the fixed wire connection part 401 in a crimping manner. Certainly, a connection manner of the fixed wire connection part 401 and the SMA wire 500 is not limited thereto, and may also be, for example, welding, bonding, or the like. The crimping mode is preferred, and the structure is simple, the operation is convenient and the connection is firm and reliable.

Specifically, as shown in FIG. 13, the fixed wire connection part 401 may be integrally formed with the chassis 402, or may not be integrally formed with the chassis 402, that is, the fixed wire connection part 401 may be formed as a separate structure attached to the chassis 402. For example, the fixed wire connection part 401 may be fixedly connected to the chassis 402 in a manner of welding, or the fixed wire connection part 401 may be connected to the chassis 402 in another fixed connection manner well known in the art.

As shown in FIG. 13, in a possible implementation, the fixed wire connection part 401 is integrally formed with the chassis 402, and the fixed wire connection part 401 is disposed at two relative side corners of the chassis 402. Further, the chassis 402 includes four side corners: a first side corner, a second side corner, a third side corner, and a fourth side corner, where the first side corner and the third side corner are relatively disposed, and the second side corner and the fourth side corner are relatively disposed. The fixed wire connection part 401 may be disposed at the first side corner and the third side corner, or may be disposed at the second side corner and the fourth side corner. In this way, the structure is simple and convenient for processing, manufacturing and assembly.

It may be understood that two relative fixed wire connection parts 401 may be disposed on the chassis 402, one fixed wire connection part 401 may be configured to separately connect one end of the two SMA wires 500, and the other fixed wire connection part 401 may be configured to separately connect one end of the other two SMA wires 500. In addition, the two fixed wire connection parts 401 and the two moving wire connection parts 301 are relatively disposed.

In a specific implementation, the chassis 402 includes a conductive component (not shown in the figure), the conductive component is electrically connected to the SMA wire 500 by using the fixed wire connection part 401, and the chassis 402 energizes the SMA wire 500 by using the conductive component so that the SMA wire 500 can contract or expand under the action of the current and drive at least a part of the spring plate 302 to move.

It should be understood that the conductive component is primarily used to energize the SMA wire 500 to cause the SMA line 500 to contract or expand under the action of electric current, and is not specifically limited to a specific structure or type of the conductive component. It may be any suitable type.

### [Housing]

The SMA driver includes a housing 100, a support member 400, a moving member 300, and an SMA wire 500. The SMA wire 500 is arranged to drive movement of the moving member 300 relative to the support member 400. The housing 100 covers the support member 400 and forms a receiving cavity there between the two, and the moving member 300 and the SMA wire 500 are disposed in the receiving cavity.

The housing 100 may also be referred to as a shielding cover or a protective cover. The housing 100 has a function of protecting an internal component, and may also have a function of antistatic or electromagnetic shielding.

Specifically, the housing 100 may be made of various steel materials, for example, the housing 100 may be made of a stainless steel material.

As shown in FIG. 10, in a specific implementation, the housing 100 includes an upper end face 101 and a plurality of protective sidewalls 102, where the plurality of protective sidewalls 102 are sequentially distributed along a circumferential direction of the upper end face 101. A through hole 103 is disposed on the upper end face 101 of the housing 100, and the through hole 103 is a lens placement hole, configured to pass the lens out of the receiving cavity to the outside of the receiving cavity.

It should be noted that while the illustrated embodiment of the SMA driver has four SMA wires 500 arranged in a rectangular pattern, other embodiments have more or fewer such wires. Each SMA wire 500 is connected to a fixed wire connection 401 and a moving wire connection 301 at an end thereof. In this SMA driver, movement in any direction in the plane can be achieved using four SMA wires 500. This improves manufacturability and reliability while providing the desired movement.

Referring to FIG. 7 to FIG. 14, another embodiment of this application provides an SMA driver. The SMA driver may include a housing 100, a support member 400, a moving member 300, an adhesive part 600, and at least a group of SMA wire 500, where the housing 100 covers the support member 400 and the moving member 300, the support member 400 includes a fixed wire connection part 401, the moving member 300 includes a moving wire connection part 301, and each group of SMA wires 500 includes a first SMA wire 501 and a second SMA wire. Each SMA wire 500 extends between a corresponding fixed wire connection part 401 and a moving wire connection part 301, and two ends of each SMA wire 500 are respectively connected to the corresponding fixed wire connection part 401 and the moving wire connection part 301.

The adhesive part 600 is disposed on the first SMA wire 501 and the second SMA wire 502, and is configured to bond at least a part of the first SMA wire 501 to at least a part of the second SMA wire 502.

In this embodiment, the adhesive part 600 is disposed in the SMA driver, and the first SMA wire 501 and the second SMA wire 502 are bonded by the adhesive part 600, that is, the upper and lower SMA wires are bonded and fixed, and then assembled, avoid a risk at which because the SMA wire is crushed or the SMA wire is pressed into the motor chassis during assembly, the wire is cut due to interference with another component. In other words, the shaking amount of the wire can be reduced, a risk at which the wire is broken or the wire is jammed with a peripheral component in a dropping process can be reduced, the problem of assembly interference or wire jamming during the assembly of the loose wire can be avoided, thereby facilitating the assembly process. The normal operation of the SMA wire is ensured.

It should be noted that this embodiment is applicable to an eight-wire SMA motor drive apparatus, and the upper and lower SMA wires 500 are bonded by using the adhesive part 600. Specific materials of other components included in this embodiment, such as the housing 100, the support member 400, the moving member 300, or the adhesive part 600, are the same as those of the SMA driver provided in the foregoing embodiment. Details are not described again in this embodiment. Hereinafter, a part different from the SMA driver provided in the foregoing embodiments is mainly described.

Specifically, the SMA driver includes four groups of SMA wires 500, and each group of SMA wires 500 includes a first SMA wire 501 and a second SMA wire 502. In other words, the SMA driver includes eight SMA wire 500 and every two SMA wires 500 are arranged in one group. Further, the SMA driver has a (abstract) vertical spindle with four groups of SMA wires 500 arranged on four side faces surrounding the spindle.

The SMA driver uses eight SMA wires 500, which may be configured in a manner capable of providing location control with a plurality of degrees of freedom to the moving member 300. For example, the SMA driver may provide multifunctional location control through selective drive of different combinations of a plurality of SMA wires 500.

As shown in FIG. 14, in a possible implementation, the eight SMA wires 500 have a symmetrical arrangement, where the length and inclination angle are the same. Further, the first SMA wire 501 and the second SMA wire 502 on each side face are arranged symmetrical to each other and have the same length. Thus, due to this symmetrical arrangement, different combinations of the eight SMA wires 500 can drive movement of the moving member 300 with a plurality of degrees of freedom in case of selective drive.

During specific implementation, before the first SMA wire 501 and the second SMA wire 502 are bonded, the first SMA wire 501 and the second SMA wire 502 may be disposed in various manners. For example, on each side face, the first SMA wire 501 and the second SMA wire 502 are arranged in cross but not contact each other; alternatively, on each side face, the first SMA wire 501 and the second SMA wire 502 are disposed parallel to each other. In this way, the adaptability is good, and the optical stabilization can be conveniently realized. It should be understood that similar structural arrangements are also provided on several other side faces not shown in FIG. 14.

In a possible implementation, both ends of each SMA wire 500 are respectively connected to a respective fixed wire connection part 401 and a moving wire connection part 301. Any suitable tool for mechanical connection may be provided, such as a crimping mechanism. The mechanical connection may also be reinforced between the end part of the SMA wire 500 and the fixed wire connection part 401 or the moving wire connection part 301 by selecting an appropriate adhesive.

As shown in FIG. 14, in a specific implementation, the adhesive part 600 is disposed at a location close to the middle of the first SMA wire 501, and/or the adhesive part 600 is disposed at a location close to the middle of the second SMA wire 502. In this way, the symmetry is good, and is helpful to prevent the SMA wire having a slightly longer length or more redundant amount from being crushed, and can further avoid a risk at which because the SMA wire is crushed or the SMA wire is pressed into the motor chassis during assembly, the SMA wire is cut due to interference with another component.

As shown in FIG. 14, in a specific implementation, the fixed wire connection part 401 includes a first fixed wire connection part 4011 and a second fixed wire connection part 4012, where the first fixed wire connection part 4011 and the second fixed wire connection part 4012 are respectively configured to connect to the first SMA wire 501 and the second SMA wire 502.

The moving wire connection part 301 includes a first moving wire connection part 3011 and a second moving wire connection part 3012, where the first moving wire connection part 3011 and the second moving wire connection part 3012 are respectively configured to connect to the first SMA wire 501 and the second SMA wire 502.

Specifically, two first fixed wire connection parts 4011 and two second fixed wire connection parts 4012 may be disposed, where one first fixed wire connection part 4011 may be configured to connect to the first SMA wires 501 on two side faces, and the other first fixed wire connection part 4011 may be configured to connect to the first SMA wires 501 on the other two side faces. Similarly, one second fixed wire connection part 4012 may be configured to connect the second SMA wires 502 on two side faces, and the other second fixed wire connection part 4012 may be configured to connect the second SMA wires 502 on the other two side faces. Similarly, two moving wire connection parts 3011 and two moving wire connection parts 3012 may be provided.

Specifically, the first fixed wire connection part 4011 and the second fixed wire connection part 4012 may be integrally formed, or may be disposed separately. The moving wire connection part 3011 and the moving wire connection part 3012 may be integrally formed, or may be disposed separately. Preferably, an integral molding manner is used, so that an internal structure of the apparatus can be simpler, and an overall structure can be reduced while ensuring a normal optical stabilization function, thereby meeting a concept of a small size of an SMA driver.

Specifically, the moving member 300 includes a moving wire connecting part 301 and a spring plate 302, where the spring plate 302 is configured to support a lower end face of the lens unit 200.

In a possible implementation, the moving wire connection part 3011 and the moving wire connection part 3012 may be disposed on the spring plate 302, and the moving wire connection part 3011 and the moving wire connection part 3012 are integrated with the spring plate 302. In addition, the moving wire connection part 3011 and the moving wire connection part 3012 may be formed as a separate structure attached to the spring plate 302, that is, not integrated with the spring plate 302.

Referring to FIG. 4 to FIG. 14, another embodiment of this application provides a camera apparatus, and the camera apparatus may include any SMA driver provided above.

The camera apparatus, in particular, a miniature camera, is typically used in multifunction electronic devices such as a mobile phone.

The camera apparatus uses an SMA driver to drive movement of the lens unit 200 to provide an OIS.

Specifically, the camera apparatus further includes an image sensor and a lens unit 200 configured to focus an image on the image sensor. The lens unit 200 is arranged to focus an image on the image sensor. An image sensor obtains an image and may be of any suitable type, such as a CCD, CMOS device, and the like.

In a possible implementation, the lens unit 200 is disposed on the spring plate 302, and a lower end face of the lens unit 200 is connected to the spring plate 302. The image sensor is fixed to the chassis 402 of the support member 400.

The lens unit 200 may be a functionally standard lens unit 200 and may have any desired configuration to provide desired optical performance, for example, may include a single lens or a plurality of lenses.

Specifically, as shown in FIG. 11, the lens unit 200 includes a lens 202 and at least one lens 201 fixed in the lens 202. For brevity, a single lens 201 is shown in FIG. 9 and FIG. 11, but a plurality of lenses 201 are optionally provided.

It should be understood that the camera apparatus may further include other components, for example, a circuit board or a control circuit. The remaining components included in the camera apparatus are not specifically limited. A core of the camera apparatus lies in that the camera apparatus includes the SMA driver provided in this application.

Generally, the camera apparatus provided in this application has a stable structure and is easy to control. The SMA wire 500 has advantages such as low power, outstanding driving effect, and the like. The structure is simple, and costs are low. The image stabilization function can be ensured. In addition, problems that because the SMA wire is crushed or pressed into the chassis 402 during assembly, the SMA wire is cut due to interference with another component, and consequently the wire is dropped and broken can be effectively resolved.

## Claims

1. An SMA driver, comprising a housing (100), a support member (400), a moving member (300), and an SMA wire (500), wherein the housing covers the support member and the moving member, and the moving member can move relative to the support member;
the support member comprises a fixed wire connection part (401);
the moving member comprises a connected moving wire connection part (301) and a spring plate (302) configured to connect to a lens unit (200);
the SMA wire extends between the fixed wire connection part and the moving wire connection part, and two ends of the SMA wire are respectively connected to the fixed wire connection part and the moving wire connection part; and
the SMA driver further comprises an adhesive part (600), and the adhesive part bonds at least a part of the SMA wire to at least a part of the spring plate.

2. The SMA driver according to claim 1, wherein the spring plate comprises an upper end face, a lower end face, and a plurality of side faces, the SMA wire is disposed around the plurality of side faces of the spring plate, and the adhesive part bonds at least a part of the SMA wire to at least a part of the side face of the spring plate.

3. The SMA driver according to claim 1, wherein the adhesive part is disposed at a location close to the middle of the SMA wire; and/or
the adhesive part is disposed at a location close to the middle of at least one of the side faces of the spring plate.

4. The SMA driver according to claim 1, wherein the spring plate and the moving wire connection part are integrally formed.

5. The SMA driver according to claim 1, wherein the spring plate is provided with a welding connection part (3021), and the welding connection part is configured to connect to the support member.

6. The SMA driver according to claim 5, wherein the adhesive part bonds at least a part of the SMA wire to at least a part of the welding connection part.

7. The SMA driver according to claim 1, wherein the support member further comprises a chassis, and the fixed wire connection part is fastened to the chassis.

8. The SMA driver according to claim 7, wherein the chassis is provided with a conductive component, and the conductive component is electrically connected to the SMA wire by using the fixed wire connection part, so that the SMA wire is alternately tensioned or loosened and drives at least a part of the spring plate to move.

9. The SMA driver according to any one of claims 1 to 8, wherein a material of the adhesive part comprises a jelly adhesive or a damping adhesive.

10. A camera apparatus, comprising the SMA driver according to any one of claims 1 to 9, wherein the spring plate is connected to the lens unit, so that the SMA driver drives the lens unit to move along a predetermined direction.

11. An electronic device, comprising the camera apparatus according to claim 10.

## Patentansprüche

1. SMA-Treiber, der ein Gehäuse (100), ein Trägerelement (400), ein bewegliches Element (300) und einen SMA-Draht (500) umfasst, wobei das Gehäuse das Trägerelement und das bewegliche Element abdeckt und sich das bewegliche Element relativ zu dem Trägerelement bewegen kann;
das Stützelement ein fixiertes Drahtverbindungsteil (401) umfasst;
das bewegliche Element ein verbundenes bewegliches Drahtverbindungsteil (301) und eine Federplatte (302), die konfiguriert sind, um sich mit einer Linseneinheit (200) zu verbinden, umfasst;
sich der SMA-Draht zwischen dem fixierten Drahtverbindungsteil und dem beweglichen Drahtverbindungsteil erstreckt und zwei Enden des SMA-Drahts jeweils mit dem fixierten Drahtverbindungsteil und dem beweglichen Drahtverbindungsteil verbunden sind; und der SMA-Treiber ferner ein Klebeteil (600) umfasst und das Klebeteil mindestens einen Teil des SMA-Drahts an mindestens einen Teil der Federplatte bindet.

2. SMA-Treiber nach Anspruch 1, wobei die Federplatte eine obere Endfläche, eine untere Endfläche und eine Vielzahl von Seitenflächen umfasst, der SMA-Draht um die Vielzahl von Seitenflächen der Federplatte herum angeordnet ist und das Klebeteil mindestens einen Teil des SMA-Drahts an mindestens einen Teil der Seitenfläche der Federplatte bindet.

3. SMA-Treiber nach Anspruch 1, wobei das Klebeteil an einer Stelle nahe der Mitte des SMA-Drahtes angeordnet ist; und/oder
das Klebeteil an einer Stelle nahe der Mitte mindestens einer der Seitenflächen der Federplatte angeordnet ist.

4. SMA-Treiber nach Anspruch 1, wobei die Federplatte und das bewegliche Drahtverbindungsteil einstückig ausgebildet sind.

5. SMA-Treiber nach Anspruch 1, wobei die Federplatte mit einem Schweißverbindungsteil (3021) versehen ist und das Schweißverbindungsteil konfiguriert ist, um sich mit dem Trägerelement zu verbinden.

6. SMA-Treiber nach Anspruch 5, wobei das Klebeteil mindestens einen Teil des SMA-Drahts an mindestens einen Teil des Schweißverbindungsteils bindet.

7. SMA-Treiber nach Anspruch 1, wobei das Trägerelement ferner ein Chassis umfasst und das fixierte Drahtverbindungsteil an dem Chassis befestigt ist.

8. SMA-Treiber nach Anspruch 7, wobei das Chassis mit einer leitfähigen Komponente versehen ist und die leitfähige Komponente durch Verwenden des fixierten Drahtverbindungsteils elektrisch mit dem SMA-Draht verbunden ist, sodass der SMA-Draht abwechselnd gespannt oder gelockert wird und mindestens einen Teil der Federplatte antreibt, um sich zu bewegen.

9. SMA-Treiber nach einem der Ansprüche 1 bis 8, wobei ein Material des Klebeteils einen Gelkleber oder einen Dämpfungskleber umfasst.

10. Kameraeinrichtung, die den SMA-Treiber nach einem der Ansprüche 1 bis 9 umfasst, wobei die Federplatte mit der Linseneinheit verbunden ist, sodass der SMA-Treiber die Linseneinheit antreibt, um sich entlang einer zuvor bestimmten Richtung zu bewegen.

11. Elektronische Vorrichtung, die die Kameraeinrichtung nach Anspruch 10 umfasst.

## Revendications

1. Pilote AMF, comprenant un boîtier (100), un élément de support (400), un élément mobile (300) et un câble AMF (500), dans lequel le boîtier recouvre l'élément de support et l'élément mobile, et l'élément mobile peut se déplacer par rapport à l'élément de support ;
l'élément de support comprend une partie de connexion de câble fixe (401) ; l'élément mobile comprend une partie de connexion de câble mobile connectée (301) et une plaque ressort (302) configurée pour se connecter à une unité formant lentille (200) ;
le câble AMF s'étend entre la partie de connexion de câble fixe et la partie de connexion de câble mobile, et deux extrémités du câble AMF sont respectivement connectées à la partie de connexion de câble fixe et à la partie de connexion de câble mobile ; et
le pilote AMF comprend en outre une partie adhésive (600), et la partie adhésive lie au moins une partie du câble AMF à au moins une partie de la plaque ressort.

2. Pilote AMF selon la revendication 1, dans lequel la plaque ressort comprend une face d'extrémité supérieure, une face d'extrémité inférieure et une pluralité de faces latérales, le câble AMF est disposé autour de la pluralité de faces latérales de la plaque ressort, et la partie adhésive lie au moins une partie du câble AMF à au moins une partie de la face latérale de la plaque ressort.

3. Pilote AMF selon la revendication 1, dans lequel la partie adhésive est disposée à un emplacement proche du milieu du câble AMF ; et/ou
la partie adhésive est disposée à un emplacement proche du milieu d'au moins l'une des faces latérales de la plaque ressort.

4. Pilote AMF selon la revendication 1, dans lequel la plaque ressort et la partie de connexion de câble mobile sont formées intégralement.

5. Pilote AMF selon la revendication 1, dans lequel la plaque ressort est pourvue d'une partie de liaison de soudage (3021), et la partie de liaison de soudage est conçue pour être reliée à l'élément de support.

6. Pilote AMF selon la revendication 5, dans lequel la partie adhésive lie au moins une partie du câble AMF à au moins une partie de la partie de liaison de soudage.

7. Pilote AMF selon la revendication 1, dans lequel l'élément de support comprend en outre un châssis, et la partie de connexion de câble fixe est fixée au châssis.

8. Pilote AMF selon la revendication 7, dans lequel le châssis est pourvu d'un composant conducteur, et le composant conducteur est connecté électriquement au câble AMF à l'aide de la partie de connexion de câble fixe, de sorte que le câble AMF est alternativement tendu ou relâché et amène au moins une partie de la plaque ressort à se déplacer.

9. Pilote AMF selon l'une quelconque des revendications 1 à 8, dans lequel un matériau de la partie adhésive comprend un adhésif gélifié ou un adhésif amortissant.

10. Appareil formant caméra, comprenant le pilote AMF selon l'une quelconque des revendications 1 à 9, dans lequel la plaque ressort est connectée à l'unité formant lentille, de sorte que le pilote AMF amène l'unité formant lentille à se déplacer le long d'une direction prédéterminée.

11. Dispositif électronique, comprenant l'appareil formant caméra selon la revendication 10.
